# EUROPEAN PATENT SPECIFICATION

(11) **EP 1 492 381 B1**
(45) Date of publication and mention of the grant of the patent: **10.01.2007**
(21) Application number: 03291538.1
(22) Date of filing: 24.06.2003
(51) Int. Cl.: H04Q 11/04, H04M 11/06, H04L 29/06

(54) **Digital subscriber line access network with improved authentication, authorization, accounting and configuration control for multicast services**
Digitales Teilnehmernanschlussleitungszugangsnetz mit verbesserter Authentifizierungs-, Berechtigungs-, Abrechnungs- und Konfigurationssteuerung für Multicast-Dienste
Réseau d'accès de lignes d'abonnés numériques avec un meilleur contrôle de l'authentification, de l'autorisation, de la comptabilité et de la configuration pour des services de multidiffusion

(43) Date of publication of application: 29.12.2004
(73) Proprietor: ALCATEL, 75008 Paris (FR)
(72) Inventor: Beck, Michael Andries Thomas, 2000 Antwerp (BE); Vandaele, Piet Michel Albert, 8650 Houthulst (BE)
(74) Representative: Narmon, Gisèle Marie Thérèse

(56) References cited:
- US-A1- 2002 162 029
- CISCO SYSTEMS: "DELIVERING MULTICAST VIDEO OVER ASYMMETRIC DIGITAL SUBSCRIBER LINE" WHITE PAPER, [Online] 1999, pages 1-14, XP002259717 Internet Retrieved from the Internet: <URL:http://www.cisco.com/warp/public/cc/s o/neso/dsso/global/madsl_wp.htm> [retrieved on 2003-10-30]

## Description

The present invention relates to a Digital Subscriber Line access network consisting of a home network at a user premises, an access network comprising a Digital Subscriber Line Access Multiplexer, an aggregation network consisting of aggregation switches, and a content network;
- said content network comprising
   a Broadband Remote Access Server and local servers providing connectivity to the Internet for a user in the home network,
   a Remote Authentication Dial-In User Server connected to said broadband remote access server for authentication, authorization and accounting of said user, and
   a digital broadcast network adapted to broadcast audio and video content to said user;
- said aggregation network being adapted to couple said broadband remote access server and said digital broadcast network to said digital subscriber line access multiplexer of said access network; and
- said access network being adapted to couple said digital subscriber line access multiplexer to a Set Top Box of said home network.

Such a Digital Subscriber Line or DSL access network is already known in the art, e.g. from the White Paper (1999) (CISCO SYSTEMS): 'DELIVERING MULTICAST VIDEO OVER ASYMMETRIC DIGITAL SUBSCRIBER LINE', pages 1-14. Therein, the Remote Authentication Dial-In User Server or RADIUS server of the content network is used for authenticating the subscriber, authorizing its access to the Internet and/or accounting of the broadcast services. On the other hand, in known DSL access networks, a middleware server, also located in the content network, is responsible of the authentication, authorization and accounting of the subscriber for multicast purposes, if required. Usually, this is based on the assumption that some multicast channels can be "hidden" and can only be accessed through a "purchase page" on the middleware server. Multicast channels that don't need authentication, authorization and accounting can usually be accessed directly, i.e. not via the middleware server.

In more detail, if the user wants to see a broadcasted channel that requires authentication, authorization and accounting, e.g. a certain TV channel, he selects it on the purchase page received from the middleware server. The middleware server then sends to the Set Top Box [STB] a reply message, e.g. a message that contains the Internet Group Management Protocol [IGMP] channel (i.e. a particular multicast address) that identifies the broadcast channel. The STB sends an IGMP report message to the Digital Subscriber Line Access Multiplexer [DSLAM] and asks the latter to send the requested channel to the user.

The DSLAM then also performs data copying, on a per user basis, of the selected channel.

This situation is somewhat artificial since the user zaps are interpreted in the DSLAM, data copying on a per user basis is done in the DSLAM, while authentication and authorization for this service is done in the middleware server.

An object of the present invention is to improve even better the present multicast service in the Digital Subscriber Line [DSL] access network.

According to the invention, this object is achieved due to the fact that said digital subscriber line access multiplexer [DSLAM] is coupled to said remote authentication dial-in user server [RADIUS] and is adapted to exchange predetermined multicast information therewith for authentication and/or accounting of multicast services to said user that is a multicast subscriber, and that said predetermined multicast information is a RADIUS authentication and/or accounting attribute for multicast.

In this way, the zapping, data copying and multicast configuration infrastructure co-locate in the Digital Subscriber Line Access Multiplexer DSLAM. The process described above remains the same and the middleware server is still responsible for Set Top Box STB application loading, electronic program guide, etc. However, the authentication and authorization of the multicast subscriber for the broadcast content is done at the DSLAM and no longer at the middleware server. This is more secure, since the DSLAM can immediately check who receives the channel and can also check whether the service is delivered correctly. The Broadband Remote Access Server [BRAS] already communicates with the Remote Authentication Dial-In User Server RADIUS for controlling the access of the user to the Internet. Now also the DSLAM communicates with RADIUS for authentication, authorization and/or accounting as well as for configuration of multicast services. The RADIUS server operates for both high speed Internet access and for broadcast services.

The communication between the DSLAM and the RADIUS server occurs by means of predetermined information transmitted under the form of messages based on extensions of the known RADIUS protocol. Each message is a "RADIUS authentication attribute" and the RADIUS protocol is RFC2865 that may for instance be found at the site:
< http://www.ietf.org/rfc/rfc2865.txt >

New RADIUS authentication attributes are added for multicast purpose. These new attributes are generally called "RADIUS authentication attribute for multicast".

Similarly to the above, the communication between the DSLAM and the RADIUS server occurs by means of predetermined information transmitted under the form of messages based on extensions of the known RADIUS protocol. Each message is a "RADIUS accounting attribute" and the RADIUS protocol is RFC2866 that may for instance be found at the site:
< http://www.ietf.org/rfc/rfc2866.txt >

New RADIUS authentication attributes are added for multicast purpose. These new attributes are generally called "RADIUS authentication attribute for multicast".

It is to be noted that the PCT application EP-A-1 481 501 published by WlPO on 12 September 2003 under number WO 031075 496 (MEHTA Hemang ET AL; NOKlA CORPORATION) and claiming the priority date of 28 June 2002 also discloses a similar Digital Subscriber Line access network.

However, therein the DSLAM doesn't communicates with RADIUS for authentication, authorization and/or accounting as well as for configuration of multicast services. In the known Digital Subscriber Line access network, at least the authentication is done locally at the DSLAM.

The present invention further also relates to a method for authenticating a multicast subscriber requesting to become member of a multicast group for receiving multicast data, said multicast subscriber being adapted to be coupled to the Internet via a Broadband Remote Access Server [BRAS] under control of a Remote Authentication Dial-In User Server [RADIUS] for authentication, authorization and accounting purposes. This method comprising the steps of
- said multicast subscriber sending a multicast join request to a Digital Subscriber Line Access Multiplexer [DSLAM],
- said digital subscriber line access multiplexer sending a multicast authentication request to an authentication server,
- said authentication server returning a grant message to said digital subscriber line access multiplexer for authorizing said subscriber to receive multicast data, and
- said digital subscriber line access multiplexer transferring said multicast data to said subscriber.

Such a method is already known in the art and is particularly suited to run in the above-mentioned DSL access network. In this known method, the join requests and zaps are transferred between the multicast subscriber and the Digital Subscriber Line Access Multiplexer DSLAM, whilst authentication and authorization for this service is exchanged between the set top box and the middleware server.

Another object of the present method is to facilitate and securize the participation of the multicast subscriber to the multicast.

According to the invention, this other object is achieved due to the fact that said authentication server to which said digital subscriber line access multiplexer [DSLAM] is sending a multicast authentication request is said remote authentication dial-in user server [RADIUS], and that said multicast authentication request is send under the form of a RADIUS authentication attribute for multicast.

The broadband remote access server BRAS already communicates with the Remote Authentication Dial-In User Server RADIUS for controlling the access of the multicast subscriber or user to the Internet, now the DSLAM also communicates with RADIUS for authentication and authorization and configuration of multicast services. The authentication and authorization are thereby simplified.

Another characterizing embodiment of the present method is that said digital subscriber line access multiplexer [DSLAM] is also sending a multicast accounting message to said remote authentication dial-in user server [RADIUS], and that said multicast accounting message is send under the form of a RADIUS accounting attribute for multicast.

The RADIUS server is thereby involved in the authentication and authorization as well as accounting for both high speed Internet access and for broadcast services. The invention allows a flexible configuration of multicast services.

Further characterizing embodiments of the present DSL access network and method used therein are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

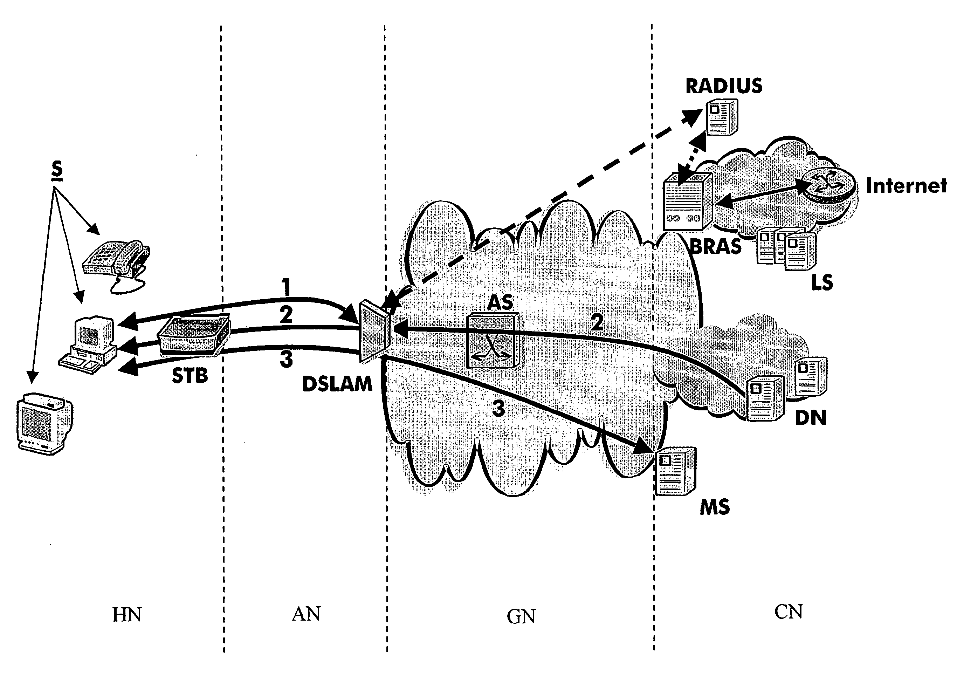

The above and other objects and features of the invention will become more apparent and the invention itself will be best understood by referring to the following description of an embodiment taken in conjunction with the accompanying drawing wherein the figure is a schematic view of a DSL access network according to the invention.

The attached figure shows a Digital Subscriber Line DSL access network delivering Internet services and broadcast TV services. The DSL access network is split up in a home network HN at the user or multicast subscriber S premises, an access network AN comprising a Digital Subscriber Line Access Multiplexer DSLAM, an aggregation network GN consisting of known L2 aggregation switches AS and a broadcast content network CN.

For high speed Internet, the content network CN includes a Broadband Remote Access Server BRAS and Local Servers LS providing connectivity to the Internet. The BRAS has a Remote Authentication Dial-In User Server RADIUS interface towards a RADIUS AAA Server for authentication, authorization and accounting purposes for the high speed internet access.

A digital broadcast network DN also forms part of the content network CN and consists of components that can acquire, encode and encapsulate the broadcast audio and video content. A middleware server MS is also included in the broadcast content network CN. It provides Set Top Box STB infrastructure support, e.g. STB application loading, electronic program guide, etc, for the multicast subscriber S.

For delivery of broadcast services to the multicast subscriber S, a bi-directional control channel 1 is required so that the multicast subscriber can control the service, e.g. select an audio or TV program. This control channel 1 is between the subscriber terminal, e.g. the Set Top Box STB, and the Digital Subscriber Line Access Multiplexer DSLAM. The DSLAM contains a zapping server that collects channel change requests when multicast subscriber S changes channels, e.g. TV channels. The multicast subscriber "zaps" are transported via Internet Group Management Protocol IGMP messages between the set top box STB and the DSLAM. Based on the zaps of the multicast subscriber, the DSLAM then replicates all TV channels as necessary for any multicast subscriber that selects the same channel. This offers scalability as each channel is only sent once by the digital broadcast network DN to each DSLAM but is replicated as necessary in the DSLAM. The distribution of the broadcast channel is generally indicated by arrow 2 in the figure.

The middleware server MS communicates with the set top box STB at the multicast subscriber premises over an IP-based bi-directional control flow and provides STB infrastructure support, e.g. STB application loading, electronic program guide, etc.. This communication is indicated by arrow 3 in the figure. Whereas in the state of the art solution, the middleware server is also responsible for authentication, authorization and accounting for the multicast services, this is no longer the case in the present invention.

The multicast join of the multicast subscriber S occurs as follows: the STB sends an IGMP report message to the DSLAM via control channel 1 and asks the DSLAM to send the broadcast channel via channel 2. To perform these operations, a number of new attributes have been added to the known and standardized "Remote Authentication Dial-In User Service" RADIUS protocol, in order to allow flexible configuration of multicast services.

The Remote Authentication Dial-In User Service [RADIUS] is a client/server protocol and software that enables remote access servers to communicate with a central server to authenticate dial-in users and authorize their access to the requested system or service. RADIUS allows a company to maintain user profiles in a central database that all remote servers can share.

Concerning the authentication, authorization and configuration information, the RADIUS protocol "RFC2865" is a protocol for carrying authentication, authorization and configuration information between a Network Access Server NAS, which desires to authenticate its links, and a shared Authentication Server, e.g. the RADIUS AAA server. The network access server NAS operates as a client of RADIUS. In today's DSL access networks the NAS is a stand-alone Broadband Remote Access Server BRAS, but in the future this functionality could as well be integrated in an Edge Router [ER], Asynchronous Transfer Mode [ATM] or Ethernet switch or Digital Subscriber Line Access Multiplexer DSLAM. The RADIUS client is responsible for passing user information to designated RADIUS servers, and then acting on the response that is returned. RADIUS servers are responsible for receiving user connection requests, authenticating the user, and then returning all configuration information necessary for the client to deliver service to the user. All transactions are comprised of variable length Attribute-Length-Value 3-tuples.

The "Access-Accept" response message sent from the RADIUS server to the BRAS contains a list of configuration values for the user, e.g. IP address, subnet mask, Maximum Transmission Unit MTU, desired compression, ... Although approximately 60 attribute type fields are specified in the standard RFC2865, none of them contains configuration information specific for multicast services.

Concerning the accounting, the RADIUS protocol "RFC2866" is a protocol often used in dial-up access to collect subscriber accounting information on a per session basis. Accounting information is carried between a BRAS and a shared accounting server, e.g. the RADIUS server. At the start of service delivery an Accounting Start packet is sent from the BRAS, describing the type of service being delivered and the user it is being delivered to. The RADIUS accounting server then sends back an acknowledgement that the packet has been received. At the end of service delivery the client will generate an Accounting Stop packet describing the type of service that was delivered and optionally statistics such as elapsed time, input and output octets, or input and output packets. It will send that to the RADIUS accounting server, which will send back an acknowledgement that the packet has been received. In RFC 2866, amongst the RADIUS attributes that describe the accounting details there are no attributes that provide multicast accounting data.

With the present invention, a number of new RADIUS authentication and accounting attributes, specific for multicast, are defined.

On the first hand, as extensions to the protocol RFC2865, the new RADIUS authentication attributes for multicast are the following:
- **Mcast-Receive-Range:** this attribute specifies a range of multicast addresses that the multicast subscriber or user can receive on that port/circuit; it can either be a specification of first and last address of a range of addresses or an enumeration of addresses. Via this mechanism the DSLAM can restrict user access to a part of the broadcast content, e.g. to differentiate a subscription for 30 channels from a subscription for 60 channels;
- **Mcast-No-Receive-Range:** this attribute specifies a range of multicast addresses that the user can not receive on that port/circuit; it can either be a specification of first and last address of a range of addresses or an enumeration of addresses, requests for that range of multicast channels should be discarded;
- **Mcast-Log-Range**: this attribute specifies a range of multicast addresses for which requests, e.g. join/leave, from users should be logged; it can either be a specification of first and last address of a range of addresses or an enumeration of addresses. A default value can indicate that all multicast events should be logged. Logging information can then be used, e.g. later, to generate statistics or to provide accounting information;
- **Mcast-Price-information:** this attribute specifies whether the multicast subscriber should pay for the multicast services or not, e.g. payper-view. This attribute may contain price information per multicast channel;
- **Mcast-Auth-Range:** this attribute specifies a range of multicast addresses for which requests from users should be followed by an extra authentication/authorization; it can either be a specification of first and last address of a range of addresses or an enumeration of addresses. It could for instance be that for some of the broadcast channels no extra authentication is required;
- **Mcast-QoS-parameters:** this attribute specifies whether a multicast stream for a port/circuit should get a special treatment, e.g. remarking of QoS parameters on L2 or L3, BW/latency related parameters; and
- **Mcast-VLAN-Mapping:** this attribute specifies on which VLAN outgoing multicast frames shall be broadcasted; it can also be used to specify on which incoming VLAN incoming traffic from a certain multicast group can be found. A VLAN or virtual (or logical) LAN is a local area network with a definition that maps workstations on some other basis than geographic location (for example, by department, type of user, or primary application). This last attribute is only applicable when the DSLAM connects to an Ethernet aggregation network.

On the other hand, as extensions to the protocol RFC2866, the new RADIUS accounting attributes for multicast are the following:
- **Acct-Mcast-Channel:** this attribute indicates the multi-cast (class D) address requested on that port/circuit, together with the amount of time for which that multicast address was sent to that port/circuit;
- **Acct-Mult-Channel:** this attribute indicates:
   - the multicast address requested on that port/circuit;
   - the time of day (accurate to the second) the multi-cast has been requested on that port/circuit (and potentially also the date);
   - the time of day (accurate to the second) the multicast service for that port/circuit has been stopped (and potentially also the date);
      the latter two fields can also be replaced by a single field that indicates the number of seconds a port/circuit has received that multicast channel;
   - potentially also a value that indicates extra services that were delivered, e.g. different QoS or latency treatment.

Multiple multicast addresses can either be grouped into one Acct-Mult-Channel attribute or multiple Acct-Mult-Channel attributes can be present in one RADIUS accounting message;
- **Acct-Mcast-Session-Time:** this attribute indicates the total number of seconds a port/circuit has received a multicast service (possibly accumulated for different multicast channels); and
- **Acct-Nr-Mcast-Requests:** this attribute indicates the total number of multicast requests received on that port during service delivery.

All these RADIUS attributes can be used in the RADIUS messages that are exchanged between the RADIUS server and the DSLAM. The RADIUS AAA server is thus involved in the authentication, authorization and accounting for both high speed Internet access as well as for broadcast services, and the new attributes allow for several flexible multicast authentication and accounting schemes.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A Digital Subscriber Line access network consisting of a home network (HN) at a user premises, an access network (AN) comprising a Digital Subscriber Line Access Multiplexer (DSLAM), an aggregation network (GN) consisting of aggregation switches (AS), and a content network (CN);
- said content network (CN) comprising
a Broadband Remote Access Server (BRAS) and local servers (LS) providing connectivity to the Internet for a user (S) in the home network (HN),
a Remote Authentication Dial-In User Server (RADIUS) connected to said broadband remote access server for authentication, authorization and accounting of said user (S), and
a digital broadcast network (DN) adapted to broadcast audio and video content to said user (S);
- said aggregation network (GN) being adapted to couple said broadband remote access server (BRAS) and said digital broadcast network (DN) to said digital subscriber line access multiplexer (DSLAM) of said access network (AN); and
- said access network (AN) being adapted to couple said digital subscriber line access multiplexer to a Set Top Box (STB) of said home network,
***characterized in that*** said digital subscriber line access multiplexer (DSLAM) is coupled to said remote authentication dial-in user server (RADIUS) and is adapted to exchange predetermined multicast information therewith for authentication and/or accounting of multicast services to said user (S) that is a multicast subscriber,
***and in that*** said predetermined multicast information is a RADIUS authentication and/or accounting attribute for multicast.

2. The digital subscriber line access network according to claim 1, ***characterized in that*** said digital subscriber line access multiplexer (DSLAM) is adapted to replicate audio and video content received from said digital broadcast network (DN) and to provide said replicated content to said multicast subscriber (S).

3. A method for authenticating a multicast subscriber (S) requesting to become member of a multicast group for receiving multicast data, said multicast subscriber being adapted to be coupled to the Internet via a Broadband Remote Access Server (BRAS) under control of a Remote Authentication Dial-In User Server (RADIUS) for authentication, authorization and accounting purposes,
said method comprising the steps of
- said multicast subscriber (S) sending a multicast join request to a Digital Subscriber Line Access Multiplexer (DSLAM),
- said digital subscriber line access multiplexer sending a multicast authentication request to an authentication server,
- said authentication server returning a grant message to said digital subscriber line access multiplexer for authorizing said subscriber to receive multicast data, and
- said digital subscriber line access multiplexer transferring said multicast data to said subscriber,
***characterized in that*** said authentication server to which said digital subscriber line access multiplexer (DSLAM) is sending a multicast authentication request is said remote authentication dial-in user server (RADIUS),
***and in that*** said multicast authentication request is send under the form of a RADIUS authentication attribute for multicast.

4. The method according to claim 3,
***characterized in that*** said digital subscriber line access multiplexer (DSLAM) is also sending a multicast accounting message to said remote authentication dial-in user server (RADIUS),
***and in that*** said multicast accounting message is send under the form of a RADIUS accounting attribute for multicast.

## Patentansprüche

1. Ein digitales Teilnehmeranschlussleitungszugangsnetz, das aus einem Heim-Netzwerk (HN) beim Teilnehmer, einem Zugangsnetz (AN), das einen digitalen Teilnehmeranschlussleitungs-Zugangsmultiplexer (DSLAM) enthält, einem Zusammenfassungs-Netzwerk (GN), das aus Zusammenfassungs-Vermittlungen (AS) besteht, und einem Content-Network (CN) besteht;
- wobei das Content-Network (CN) folgendes umfasst:
einen Breitband-Fernzugangs-Server (BRAS) und lokale Server (LS), die Verbindungsmöglichkeiten zum Internet für einen Teilnehmer (S) im Heim-Netzwerk (HN) bereitstellen,
einen Fern-Authentifizierungs-Einwahl-Teilnehmer-Server (Remote Authentication Dial-In User Server, RADIUS), der mit dem Breitband-Fernzugangs-Server zur Authentifizierung, Autorisierung und Gebührenabrechnung des Teilnehmers (S) verbunden ist, und
ein digitales Rundsende-Netz (DN), das angepasst ist, Audio- und Video-Inhalt an den Benutzer (S) rundzusenden;
- das Zusammenfassungs-Netzwerk (GN), das angepasst ist, den Breitband-Fernzugangs-Server (BRAS) und das digitale Rundsende-Netz (DN) mit dem digitalen Teilnehmeranschlussleitungs-Zugangsmultiplexer (DSLAM) des Zugangsnetzes (AN) zu koppeln; und
- das Zugangsnetz (AN), das angepasst ist, den digitalen Teilnehmeranschlussleitungs-Zugangsmultiplexer mit einer Set Top Box (STB) des Heim-Netzwerks zu koppeln,
***dadurch gekennzeichnet, dass*** der digitale Teilnehmeranschlussleitungs-Zugangsmultiplexer (DSLAM) mit dem Fern-Authentifizierungs-Einwahl-Teilnehmer-Server (RADIUS) gekoppelt und angepasst ist, vorher festgelegte Multicast-Information mit ihm austauschen, um die Authentifizierung und/oder Gebührenabrechnung von Multicast-Diensten für den Benutzer (S) durchzuführen, der ein Multicast-Teilnehmer ist,
***und dadurch, dass*** die vorher festgelegte Multicast-Information ein RADIUS-Authentifizierungs- und/oder Gebührenabrechnungs-Attribut für Multicast ist.

2. Das digitale Teilnehmeranschlussleitungszugangsnetz nach Anspruch 1, ***dadurch gekennzeichnet, dass*** der digitale Teilnehmeranschlussleitungs-Zugangsmultiplexer (DSLAM) angepasst ist, Audio- und Video-Inhalt zu vervielfältigen, den er vom digitalen Rundsendenetz (DN) empfangen hat, und den verviefältigten Inhalt an den Multicast-Teilnehmer (S) zu senden.

3. Ein Verfahren zur Authentifizierung eines Multicast-Teilnehmers (S), der Mitglied einer Multicast-Gruppe zum Empfang von Multicast-Daten werden möchte, wobei der Multicast-Teilnehmer angepasst ist, gesteuert durch einen Fern-Authentifizierungs-Einwahl-Teilnehmer-Server (RADIUS) für Authentifizierungs-, Autorisierungs- und Gebührenabrechnungs-Zwecke über einen Breitband-Fernzugangs-Server (BRAS) mit dem Internet gekoppelt zu werden,
wobei das Verfahren folgende Schritte umfasst:
- Der Multicast-Teilnehmer (S) sendet eine Multicast-Angliederungs-Anforderung zu einem digitalen Teilnehmeranschlussleitungs-Zugangsmultiplexer (DSLAM),
- der digitale Teilnehmeranschlussleitungs-Zugangsmultiplexer sendet eine Multicast-Authentifizierungs-Anforderung an einen Authentifizierungs-Server,
- der Authentifizierungs-Server sendet eine Genehmigungs-Nachricht zurück an den digitalen Teilnehmeranschlussleitungs-Zugangsmultiplexer, um dem Teilnehmer die Berechtigung zu erteilen, Multicast-Daten zu empfangen, und
- der digitale Teilnehmeranschlussleitungs-Zugangsmultiplexer überträgt die Multicast-Daten zu dem Teilnehmer,
***dadurch gekennzeichnet, dass*** der Authentifizierungs-Server, zu dem der digitale Teilnehmeranschlussleitungs-Zugangsmultiplexer (DSLAM) eine Multicast-Authentifizierungs-Anforderung sendet, der Fern-Authentifizierungs-Einwahl-Teilnehmer-Server (RADIUS) ist,
***und dadurch, dass*** die Multicast-Authentifizierungs-Anforderung in Form eines RADIUS-Authentifizierungs-Attributes für Multicast gesendet wird.

4. Das Verfahren nach Anspruch 3,
***dadurch gekennzeichnet, dass*** der digitale Teilnehmeranschlussleitungs-Zugangsmultiplexer (DSLAM) auch eine Multicast-Gebührenabrechnungs-Nachricht an den Fern-Authentifizierungs-Einwahl-Teilnehmer-Server (RADIUS) sendet,
***und dadurch, dass*** die Multicast-Gebührenabrechnungs-Nachricht in Form eines RADIUS-Gebührenabrechnungs-Attributes für Multicast gesendet wird.

## Revendications

1. Réseau d'accès de ligne d'abonné numérique constitué d'un réseau résidentiel (HN) dans des locaux d'utilisateur, d'un réseau d'accès (AN) comprenant un multiplexeur d'accès de ligne d'abonné numérique (DSLAM), d'un réseau d'agrégation (GN) constitué de commutateurs d'agrégation (AS), et d'un réseau de contenu (CN) ;'
- ledit réseau de contenu (CN) comprenant :
un serveur d'accès distant à large bande (BRAS) et des serveurs locaux (LS) fournissant une connectivité à l'Internet pour un utilisateur (S) dans le réseau résidentiel (HN),
un serveur d'authentification distante d'utilisateur commuté (RADIUS) connecté au dit serveur d'accès distant à large bande à des fins d'authentification, d'autorisation et de comptabilité dudit utilisateur (S), et
un réseau de télédiffusion numérique (DN) adapté pour télédiffuser un contenu audio et vidéo au dit utilisateur (S) ;
- ledit réseau d'agrégation (GN) étant adapté pour coupler ledit serveur d'accès distant à large bande (BRAS) et ledit réseau de télédiffusion numérique (DN) au dit multiplexeur d'accès de ligne d'abonné numérique (DSLAM) dudit réseau d'accès (AN) ; et
- ledit réseau d'accès (AN) étant adapté pour coupler ledit multiplexeur d'accès de ligne d'abonné numérique à un convertisseur-décodeur (STB) dudit réseau résidentiel,
**caractérisé en ce que** ledit multiplexeur d'accès de ligne d'abonné numérique (DSLAM) est couplé au dit serveur d'authentification distante d'utilisateur commuté (RADIUS) et est adapté pour échanger des informations prédéterminées de diffusion sélective avec celui-ci à des fins d'authentification et/ou de comptabilité de services de diffusion sélective pour ledit utilisateur (S) qui est un abonné de diffusion sélective,
et **en ce que** lesdites informations prédéterminées de diffusion sélective sont un attribut d'authentification et/ou comptabilité RADIUS pour la diffusion sélective.

2. Réseau d'accès de ligne d'abonné numérique selon la revendication 1, **caractérisé en ce que** ledit multiplexeur d'accès de ligne d'abonné numérique (DSLAM) est adapté pour dupliquer un contenu audio et vidéo reçu en provenance dudit réseau de télédiffusion numérique (DN) et pour fournir ledit contenu dupliqué au dit abonné de diffusion sélective (S).

3. Procédé d'authentification d'un abonné de diffusion sélective (S) demandant de devenir membre d'un groupe de diffusion sélective afin de recevoir des données de diffusion sélective, ledit abonné de diffusion sélective étant adapté pour être couplé à l'Internet via un serveur d'accès distant à large bande (BRAS) sous le contrôle d'un serveur d'authentification distante d'utilisateur commuté (RADIUS) à des fins d'authentification, d'autorisation et de comptabilité,
ledit procédé comprenant les étapes consistant à ce que :
- ledit abonné de diffusion sélective (S) envoie une demande d'ouverture de session de diffusion sélective à un multiplexeur d'accès de ligne d'abonné numérique (DSLAM),
- ledit multiplexeur d'accès de ligne d'abonné numérique envoie une demande d'authentification de diffusion sélective à un serveur d'authentification,
- ledit serveur d'authentification renvoie un message d'attribution au dit multiplexeur d'accès de ligne d'abonné numérique afin d'autoriser ledit abonné à recevoir des données de diffusion sélective, et
- ledit multiplexeur d'accès de ligne d'abonné numérique transfère lesdites données de diffusion sélective au dit abonné,
**caractérisé en ce que** ledit serveur d'authentification auquel ledit multiplexeur d'accès de ligne d'abonné numérique (DSLAM) envoie une demande d'authentification de diffusion sélective est ledit serveur d'authentification distante d'utilisateur commuté (RADIUS),
et **en ce que** ladite demande d'authentification de diffusion sélective est envoyée sous la forme d'un attribut d'authentification RADIUS pour diffusion sélective.

4. Procédé selon la revendication 3, **caractérisé en ce que** ledit multiplexeur d'accès de ligne d'abonné numérique (DSLAM) envoie également un message de comptabilité de diffusion sélective au dit serveur d'authentification distante d'utilisateur commuté (RADIUS),
et **en ce que** ledit message de comptabilité de diffusion sélective est envoyé sous la forme d'un attribut de comptabilité RADIUS pour diffusion sélective.
